# EUROPÄISCHE PATENTSCHRIFT

(11) **EP 2 138 296 B1**
(45) Veröffentlichungstag und Bekanntmachung des Hinweises auf die Patenterteilung: **22.01.2014**
(21) Anmeldenummer: 08011502.5
(22) Anmeldetag: 25.06.2008
(51) Int. Cl.: B29C 47/08, B29C 47/40

(54) **Verfahren zum Inbetriebnehmen einer Extruderanordnung**
Startup method for an extruder
Procédé de démarrage d'une extrudeuse

(43) Veröffentlichungstag der Anmeldung: 30.12.2009
(73) Patentinhaber: Coperion GmbH, 70469 Stuttgart (DE)
(72) Erfinder: Christ, Herbert, 72124 Pliezhausen (DE)
(74) Vertreter: Rau, Manfred

(56) Entgegenhaltungen:
- EP-A1- 2 030 757
- DE-A1- 19 626 554
- DE-A1- 19 736 549
- DE-A1- 19 859 348
- DE-A1-102007 030 018
- US-A1- 2003 012 838
- JOHANNES AHLINDER ET AL: "Synchronous Superlatives" INTERNET CITATION, [Online] Juni 2004 (2004-06), Seiten 41-45, XP002508491 Gefunden im Internet: URL:http://library.abb.com/global/scot/sco t234.nsf/veritydisplay/52a31acd85411f82c12 56f9d002a8adb/$File/3BSM900961.pdf> [gefunden am 2008-12-16]
- JOSEPH NEVELSTEEN, HUMBERTO ARAGON: "Starting of Large Motors - Methods and Economics" IEEE TRANSACTIONS ON INDUSTRY APPLICATIONS, [Online] Bd. 25, Nr. 6, November 1989 (1989-11), Seiten 1012-1018, XP002508492 Gefunden im Internet: URL:http://ieeexplore.ieee.org/stamp/stamp .jsp?arnumber=00044236> [gefunden am 2008-12-17]

## Beschreibung

Die Erfindung betrifft ein Verfahren zum Inbetriebnehmen einer Extruderanordnung.

Aus der DE 197 36 549 C2 ist eine Extruderanordnung mit einem Doppelschneckenextruder bekannt, der über ein Überlagerungsgetriebe von einem Hauptmotor und einem Zusatzmotor angetrieben wird. Der Hauptmotor ist als Drehstrommotor ausgebildet und auf ca. 75% der Gesamtantriebsleistung ausgelegt. Der Hauptmotor wird direkt am Energieversorgungsnetz mit einer festen Drehzahl betrieben. Der Zusatzmotor ist ein frequenzgeregelter Drehstrommotor, der auf ca. 25% der Gesamtantriebsleistung ausgelegt ist. Durch eine stufenlose Drehzahlregelung des Zusatzmotors kann die Extruder-Drehzahl innerhalb eines Stellbereiches stufenlos eingestellt werden. Eine derartige Extruderanordnung ist insbesondere dann vorteilhaft, wenn der Extruder eine hohe Antriebsleistung, beispielsweise von 10000 kW und mehr, benötigt.

Zum Inbetriebnehmen der Extruderanordnung wird zunächst der Hauptmotor direkt am Energieversorgungsnetz angefahren und nach Erreichen seiner Drehzahl der drehzahlregelbare Zusatzmotor zugeschaltet und angefahren. Alternativ wird auch zunächst der drehzahlregelbare Zusatzmotor angefahren und nach Erreichen seiner Drehzahl der Hauptmotor direkt an das Energieversorgungsnetz geschaltet und angefahren. Nachteilig bei diesen Verfahren ist, dass es bei schwachen Energieversorgungsnetzen zu einer starken Absenkung der Netzspannung kommt, da der Hauptmotor beim Anfahren einen hohen Anlaufstrom, der dem 5- bis 8-fachen Nennstrom des Hauptmotors entspricht, aus dem Energieversorgungsnetz zieht. Diese Absenkung der Netzspannung ist bei schwachen Energieversorgungsnetzen nicht akzeptabel.

Aus dem Artikel "Synchronous Superlatives" von Johannes Ahlinder et al. (Special Report ABB Review, Seiten 41 bis 45) ist ein Anfahrverfahren bekannt, bei dem ein Synchronmotor zunächst mittels eines Frequenzumrichters angefahren und anschließend direkt an das Netz geschaltet wird. Hierdurch werden die Netzrückwirkungen des Synchronmotors beim Anfahren reduziert.

Aus der DE 10 2007 030 018 A1 ist ein Verfahren zum Inbetriebnehmen einer Extruderanordnung bekannt. Die Extruderanordnung weist einen Doppelschneckenextruder auf, der über ein Getriebe mit einem Hauptmotor und einem Hilfsmotor drehantreibbar ist. Der Doppelschneckenextruder wird zunächst mittels des Hilfsmotors und einer zugehörigen Steuervorrichtung leergefahren. Anschließend wird der Doppelschneckenextruder mittels des Hilfsmotors und der Steuervorrichtung angefahren, wobei der Startstrom mittels der Steuervorrichtung begrenzt wird. Der Hauptmotor wird zusammen mit dem Doppelschneckenextruder mittels des Hilfsmotors angefahren, wobei der Hauptmotor während des Anfahrens von dem Netz getrennt ist. Erreicht der Hauptmotor seine Nenngeschwindigkeit, wird der zugehörige Schalter geschlossen und der Hauptmotor direkt am Netz betrieben.

Der Erfindung liegt die Aufgabe zugrunde, ein einfaches und schnelles Verfahren zum Inbetriebnehmen einer Extruderanordnung zu schaffen, das auch bei hohen Antriebsleistungen keine inakzeptablen Rückwirkungen auf ein schwaches Energieversorgungsnetz verursacht.

Diese Aufgabe wird erfindungsgemäß durch ein Verfahren mit den Merkmalen des Anspruchs 1 gelöst. Durch die Umschalteinrichtung wird ermöglicht, dass der zum Drehzahlregeln des Zusatz-Drehstrommotors vorgesehene Frequenzumrichter beim Inbetriebnehmen der Extruderanordnung umschaltbar entweder mit dem Haupt-Drehstrommotor oder mit dem Zusatz-Drehstrommotor elektrisch verbindbar ist. Zum Inbetriebnehmen der Extruderanordnung wird die Umschalteinrichtung zunächst derart betätigt, dass der Haupt-Drehstrommotor mit dem Frequenzumrichter verbunden wird. Auf diese Weise kann der Haupt-Drehstrommotor sowie das Getriebe und der Extruder mittels des Frequenzumrichters drehzahlgeregelt angefahren werden, wodurch der Anlaufstrom auf ein gewünschtes Maß begrenzt werden kann. Nach dem Anfahren des Haupt-Drehstrommotors wird die Umschalteinrichtung derart betätigt, dass der Haupt-Drehstrommotor direkt mit dem Netzanschluss, also mit dem Energieversorgungsnetz ohne Zwischenschaltung des Frequenzumrichters, verbunden und von dem Frequenzumrichter getrennt wird. Der Haupt-Drehstrommotor wird nun mit einer im Wesentlichen festen Drehzahl betrieben. Mittels der Umschalteinrichtung wird nun der Zusatz-Drehstrommotor mit dem Frequenzumrichter verbunden und mittels diesem drehzahlgeregelt angefahren, so dass auch der Anlaufstrom des Zusatz-Drehstrommotors auf ein gewünschtes Maß begrenzt werden kann. Dadurch, dass die Anlaufströme beim Inbetriebnehmen der Extruderanordnung auf ein gewünschtes Maß begrenzt werden können, kann auch die mit den Anlaufströmen verbundene Absenkung der Netzspannung auf ein gewünschtes Maß begrenzt werden. Die Rückwirkungen auf das Energieversorgungsnetz sind somit beim Inbetriebnehmen der Extruderanordnung akzeptabel. Dadurch, dass der Frequenzumrichter zum Drehzahlregeln des Zusatz-Drehstrommotors sowieso vorhanden ist, ist der Zusatzaufwand für die Umschalteinrichtung gering.

Das Leerfahren des Extruders vor dem Anfahren des Haupt-Drehstrommotors reduziert das erforderliche Drehmoment beim Wiederanfahren des Haupt-Drehstrommotors und des damit gekoppelten Extruders nach einer Betriebsunterbrechung. Durch das Leerfahren wird das im Extruder befindliche Material aus diesem beseitigt. Das Leerfahren erfolgt mit dem Zusatz-Drehstrommotor bei einer niedrigen Drehzahl. Durch das Leerfahren wird verhindert, dass ein zusätzliches Drehmoment für das im Extruder befindliche Material aufgebracht werden muss. Nach dem Leerfahren kann der Extruder in der beschriebenen Weise wieder angefahren werden. Das Trägheitsmoment des Zusatz-Drehstrommotors ist wesentlich kleiner als das Trägheitsmoment des Haupt-Drehstrommotors, so dass der Zusatz-Drehstrommotor schneller auf die erforderliche Drehzahl zum Leerfahren des Extruders beschleunigbar ist. Da die Antriebsleistung des Zusatz-Drehstrommotors zum Leerfahren ausreichend ist, kann das Leerfahren mit dem Zusatz-Drehstrommotor schneller und einfacher als mit dem Haupt-Drehstrommotor erfolgen. Der Zusatz-Drehstrommotor ermöglicht in einfacher Weise das Einstellen einer materialabhängigen Extruder-Drehzahl. Die eingestellte Extruder-Drehzahl kann mittels des Frequenzumrichters über den Zusatz-Drehstrommotor geregelt werden.

Der erste Schalter ermöglicht in einfacher Weise das Verbinden und Trennen des Frequenzumrichters mit dem Haupt-Drehstrommotor. Beim Anfahren des Haupt-Drehstrommotors ist der Schalter geschlossen, so dass der Frequenzumrichter mit dem Haupt-Drehstrommotor elektrisch verbunden ist. Beim Anfahren des Zusatz-Drehstrommotors und im normalen Betrieb der Extruderanordnung ist der Schalter offen.

Der zweite Schalter ermöglicht in einfacher Weise das Verbinden und Trennen des Frequenzumrichters mit dem Zusatz-Drehstrommotor. Beim Anfahren des Haupt-Drehstrommotors ist der Schalter offen. Beim Anfahren des Zusatz-Drehstrommotors und im normalen Betrieb der Extruderanordnung ist der Schalter geschlossen, so dass der Frequenzumrichter zum Drehzahlregeln des Zusatz-Drehstrommotors mit diesem elektrisch verbunden ist.

Der dritte Schalter ermöglicht in einfacher Weise das Verbinden und Trennen des Haupt-Drehstrommotors mit dem direkten Netzanschluss. Beim Anfahren des Haupt-Drehstrommotors ist der Schalter offen. Beim Anfahren des Zusatz-Drehstrommotors und im normalen Betrieb der Extruderanordnung ist der Schalter geschlossen, so dass der Haupt-Drehstrommotor mit einer im Wesentlichen festen Drehzahl direkt an dem Energieversorgungsnetz betrieben wird.

Eine Synchronisiereinrichtung nach Anspruch 2 ermöglicht ein gesteuertes Zuschalten des angefahrenen Haupt-Drehstrommotors direkt an das Energieversorgungsnetz. Die Synchronisiereinrichtung synchronisiert mittels des Frequenzumrichters die an dem Haupt-Drehstrommotor anliegende Spannung hinsichtlich der Amplitude, der Frequenz und der Phasenlage mit der Netzspannung des Energieversorgungsnetzes. Sind die zulässigen Abweichungen hinsichtlich Amplitude, Frequenz und Phasenlage zwischen der Spannung des Haupt-Drehstrommotors und der Netzspannung eingehalten, so gibt die Synchronisiereinrichtung das direkte Zuschalten des Haupt-Drehstrommotors an das Energieversorgungsnetz frei. Beschädigungen der Extruderanordnung durch falsches Zuschalten des Haupt-Drehstrommotors werden durch die Synchronisiereinrichtung zuverlässig vermieden.

Eine Weiterbildung nach Anspruch 3 ermöglicht ein zuverlässiges Anfahren des Haupt-Drehstrommotors mittels des Frequenzumrichters. Die Auslegung des Frequenzumrichters ist ausreichend, damit der Haupt-Drehstrommotor ein ausreichendes Drehmoment zum Anfahren des Getriebes und des leeren oder teilweise mit Material gefüllten Extruders erzeugen kann.

Ein Frequenzumrichter nach Anspruch 4 wird optimal genutzt, da der Frequenzumrichter sowohl auf die Antriebsleistung des Zusatz-Drehstrommotors im normalen Betrieb der Extruderanordnung als auch auf die benötigte Antriebsleistung für das Anfahren des Haupt-Drehstrommotors ausgelegt ist.

Bei einem Extruder nach Anspruch 5 kommen die erfindungsgemäßen Vorteile besonders zum Tragen, da Doppelschneckenextruder eine Antriebsleistung von 10000 kW und mehr benötigen.

Eine Synchronisation nach Anspruch 6 verhindert eine Beschädigung der Extruderanordnung durch falsches Zuschalten des angefahrenen Haupt-Drehstrommotors an das Energieversorgungsnetz. Die am Haupt-Drehstrommotor anliegende Spannung wird mit der Netzspannung hinsichtlich der Amplitude, der Frequenz und der Phasenlage vor dem direkten Verbinden synchronisiert.

Weitere Merkmale, Vorteile und Einzelheiten der Erfindung ergeben sich aus der nachfolgenden Beschreibung mehrerer Ausführungsbeispiele anhand der Zeichnung. Es zeigen:
- Fig. 1: eine Prinzipdarstellung einer Extruderanordnung mit einem Extruder und einer Umschalteinrichtung gemäß einem ersten Ausführungsbeispiel,
- Fig. 2: eine Draufsicht auf den teilweise aufgebrochen dargestellten und über ein Getriebe mit einer Antriebseinheit gekoppelten Extruder gemäß Fig. 1,
- Fig. 3: einen ausschnittsweisen Längsschnitt durch den Extruder gemäß Fig. 2, und
- Fig. 4: eine Prinzipdarstellung einer Extruderanordnung mit einer Umschalteinrichtung gemäß einem zweiten Ausführungsbeispiel.

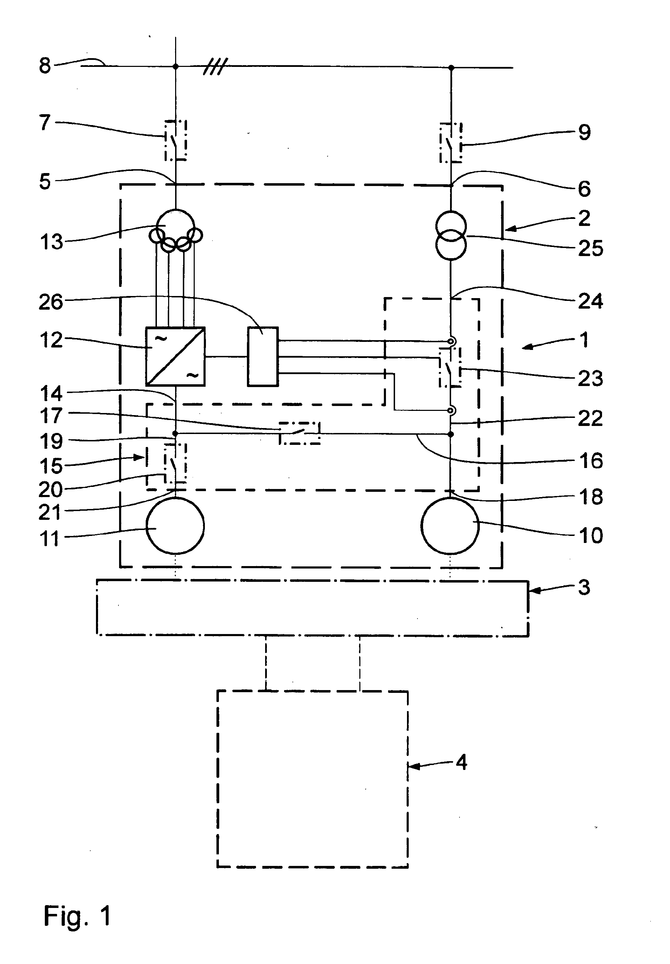

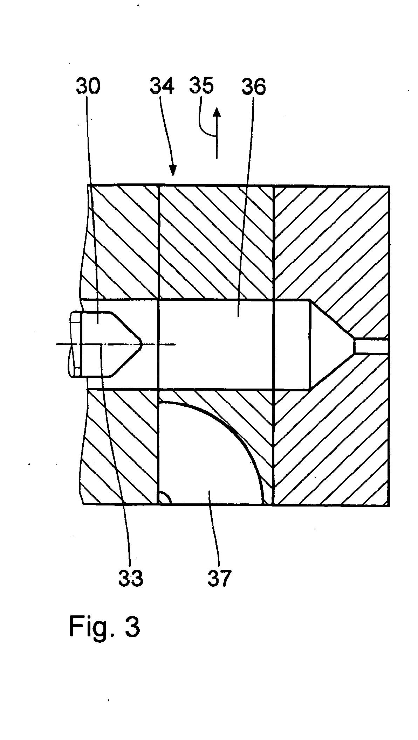

Nachfolgend wird unter Bezugnahme auf die Fig. 1 bis 3 ein erstes Ausführungsbeispiel der Erfindung beschrieben. Eine Extruderanordnung 1 weist eine Antriebseinheit 2 auf, die über ein Getriebe 3 mit einem Extruder 4 mechanisch gekoppelt ist. Der Extruder 4 ist als gleichsinnig drehender Doppelschneckenextruder ausgebildet.

Die nachfolgenden Ausführungen zu der Antriebseinheit 2 beziehen sich auf die einphasige Darstellung in Fig. 1, sind jedoch in üblicher Weise dreiphasig zu verstehen. Die Antriebseinheit 2 weist einen ersten Netzanschluss 5 und einen zweiten Netzanschluss 6 auf. Der erste Netzanschluss 5 ist über einen ersten Netzschalter 7 mit einem Energieversorgungsnetz 8 elektrisch verbindbar. Entsprechend ist der zweite Netzanschluss 6 über einen zweiten Netzschalter 9, der parallel zu dem ersten Netzschalter 7 angeordnet ist, mit dem Energieversorgungsnetz 8 elektrisch verbindbar. Das Energieversorgungsnetz 8 weist eine Netzspannung im Mittelspannungsbereich, beispielsweise von 33 kV, auf.

Zum Antreiben des Extruders 4 weist die Antriebseinheit 2 einen Haupt-Drehstrommotor 10 und einen Zusatz-Drehstrommotor 11 auf, die als Asynchronmotoren ausgebildet sind. Alternativ können der Haupt-Drehstrommotor 10 und der Zusatz-Drehstrommotor 11 als Synchronmotoren ausgebildet sein. Die Drehstrommotoren 10 und 11 stellen eine Gesamtantriebsleistung von mehr als 10000 kW bereit, wovon auf den Zusatz-Drehstrommotor 11 ein Anteil von 15% bis 45%, insbesondere von 20% bis 40%, und insbesondere von 25% bis 35%, entfällt. Beispielhaft kann die Gesamtantriebsleistung 16800 kW sein, wovon auf den Haupt-Drehstrommotor 10 ein Anteil von 12000 kW (71,5%) und auf den Zusatz-Drehstrommotor 11 ein Anteil von 4800 kW (28,5%) entfällt. Zum Drehzahlregeln des Zusatz-Drehstrommotors 11 ist ein Frequenzumrichter 12 vorgesehen, der entsprechend dem Anteil des Zusatz-Drehstrommotors 11 an der Gesamtantriebsleistung ausgelegt ist. Das bedeutet, dass der Frequenzumrichter 12 beispielsweise auf eine Leistung von ungefähr 4800 kW bis 5000 kW ausgelegt ist, wenn der Zusatz-Drehstrommotor 11 einen Anteil von 4800 kW an der Gesamtantriebsleistung hat.

Der Frequenzumrichter 12 ist in üblicher Weise aufgebaut und umfasst eine Gleichrichtereinheit, einen Zwischenkreis und eine Wechselrichtereinheit. Die Gleichrichtereinheit ist 24-pulsig ausgebildet. Der Frequenzumrichter 12 ist gleichrichterseitig mit einem ersten Transformator 13 elektrisch verbunden. Der erste Transformator 13 ist als 5-Wicklungs-Transformator ausgebildet und weist sekundärseitig zur Versorgung der 24-pulsigen Gleichrichtereinheit vier Wicklungen auf. Die primärseitige Wicklung des ersten Transformators 13 ist mit dem ersten Netzanschluss 5 elektrisch verbunden. Der Aufbau des ersten Transformators 13 ist üblich und bekannt.

Wechselrichterseitig ist der Frequenzumrichter 12 mit einem ersten Eingang 14 einer Umschalteinrichtung 15 elektrisch verbunden. Die Umschalteinrichtung 15 ist derart ausgebildet, dass der Frequenzumrichter 12 umschaltbar entweder mit dem Haupt-Drehstrommotor 10 oder mit dem Zusatz-Drehstrommotor 11 elektrisch verbindbar ist. Weiterhin ist die Umschalteinrichtung 15 derart ausgebildet, dass der Haupt-Drehstrommotor 10 über den zweiten Netzanschluss 6 direkt mit dem Energieversorgungsnetz 8, also ohne Zwischenschaltung des Frequenzumrichters 12, elektrisch verbindbar ist. Hierzu weist die Umschalteinrichtung 15 eine erste elektrische Leitung 16 mit einem ersten Schalter 17 auf, wobei die erste Leitung 16 den ersten Eingang 14 mit einem ersten Ausgang 18 der Umschalteinrichtung 15 elektrisch verbindet. Der erste Ausgang 18 ist mit dem Haupt-Drehstrommotor 10 elektrisch verbunden, so dass durch Betätigen des ersten Schalters 17 der Frequenzumrichter 12 mit dem Haupt-Drehstrommotor 10 verbunden oder von diesem getrennt werden kann.

Weiterhin weist die Umschalteinrichtung 15 eine zweite elektrische Leitung 19 mit einem zweiten Schalter 20 auf, wobei die zweite Leitung 19 den ersten Eingang 14 mit einem zweiten Ausgang 21 der Umschalteinrichtung 15 elektrisch verbindet. Der zweite Ausgang 21 ist mit dem Zusatz-Drehstrommotor 11 elektrisch verbunden, so dass durch Betätigen des zweiten Schalters 20 der Frequenzumrichter 12 mit dem Zusatz-Drehstrommotor 11 verbunden oder von diesem getrennt werden kann.

Die Umschalteinrichtung 15 weist weiterhin eine dritte elektrische Leitung 22 mit einem dritten Schalter 23 auf, wobei die dritte Leitung 22 einen zweiten Eingang 24 der Umschalteinrichtung 15 mit dem ersten Ausgang 18 elektrisch verbindet. Der zweite Eingang 24 ist über einen zweiten Transformator 25 mit dem zweiten Netzanschluss 6 verbunden, so dass durch Betätigen des dritten Schalters 23 der Haupt-Drehstrommotor 10 über den Transformator 25 direkt, also ohne Zwischenschaltung des Frequenzumrichters 12, mit dem zweiten Netzanschluss 6 verbunden oder von diesem getrennt werden kann. Der Transformator 25 weist sekundärseitig beispielsweise eine Spannung von 4,16 kV auf. Der Frequenzumrichter 12 weist wechselrichterseitig eine entsprechende Spannung auf.

Zum Synchronisieren des Haupt-Drehstrommotors 10 weist die Antriebseinheit 2 eine Synchronisiereinrichtung 26 auf. Die Synchronisiereinrichtung 26 ist netzseitig vor dem dritten Schalter 23 und motorseitig nach dem dritten Schalter 23 in Signalverbindung mit der dritten Leitung 22. Darüber hinaus ist die Synchronisiereinrichtung 26 in Signalverbindung mit dem Frequenzumrichter 12 und dem dritten Schalter 23 der Umschalteinrichtung 15.

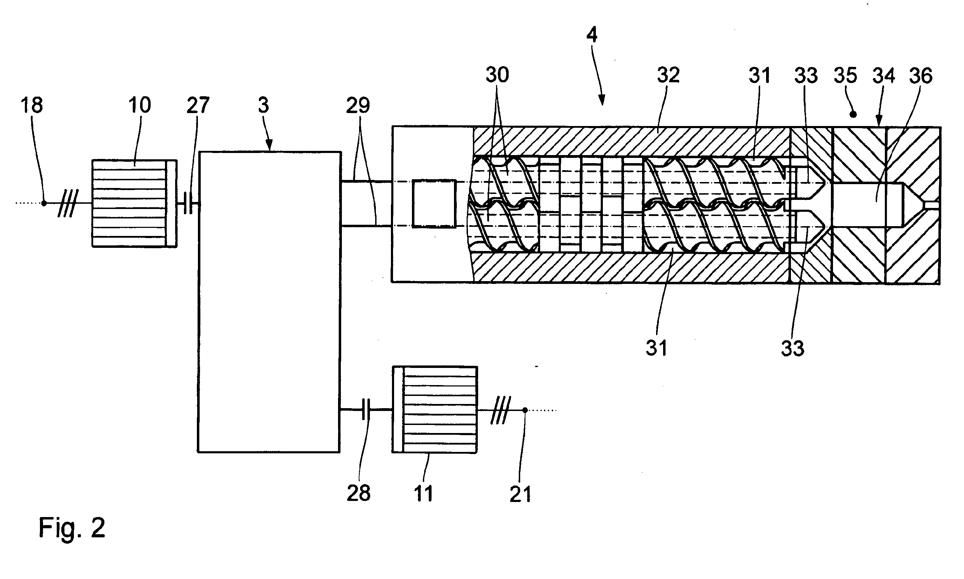

Das Getriebe 3 ist als Überlagerungsgetriebe ausgebildet und beispielsweise in der EP 0 962 298 (entspr. US 6 106 426) im Detail beschrieben, worauf verwiesen wird. Das Getriebe 3 ist antriebsseitig mittels einer ersten Kupplung 27 mit dem Haupt-Drehstrommotor 10 und mittels einer zweiten Kupplung 28 mit dem Zusatz-Drehstrommotor 11 mechanisch koppelbar. Abtriebsseitig ist das Getriebe 3 über - in Fig. 2 lediglich angedeutete - Abtriebswellen 29 fest mit Schneckenwellen 30 des Extruders 4 mechanisch gekoppelt. Die Schneckenwellen 30 sind in zwei einander in Form einer liegenden 8 durchdringenden Bohrungen 31 eines Gehäuses 32 angeordnet und um parallele Drehachsen 33 in einer gemeinsamen Drehrichtung drehantreibbar. An einer dem Getriebe 3 abgewandten Seite weist der Extruder 4 ein Anfahrventil 34 auf, das in einer senkrecht zu den Drehachsen 33 verlaufenden Richtung 35 verlagerbar ist. Das Anfahrventil 34 weist für den normalen Betrieb eine erste geradlinig verlaufende Durchgangsbohrung 36 auf. Darüber hinaus weist das Anfahrventil 34 eine zweite Durchgangsbohrung 37 auf, die gekrümmt verläuft und nach unten austritt. Die zweite Durchgangsbohrung 37 dient zum Ableiten von im Extruder 4 befindlichem Material. Der Aufbau des Extruders ist bekannt und beispielsweise in der EP 1 508 424 (entspr. US 2005/0041521) beschrieben, worauf verwiesen wird.

### Das Inbetriebnehmen der Extruderanordnung 1 erfolgt wie folgt:

Die Netzschalter 7 und 9 sowie die Schalter 17, 20 und 23 sind zunächst offen. Der Haupt-Drehstrommotor 10 und der Zusatz-Drehstrommotor 11 befinden sich im Stillstand. Dementsprechend befinden sich das Getriebe 3 und der Extruder 4 im Stillstand. In den Bohrungen 31 des Extruders 4 befinden sich noch Reste eines Materials, das in einem vorangegangenen Betrieb der Extruderanordnung 1 verarbeitet wurde.

Zum Inbetriebnehmen der Extruderanordnung 1 werden zunächst die Netzschalter 7 und 9 geschlossen. Damit der Extruder 4 beim Inbetriebnehmen ein möglichst geringes Gegendrehmoment aufweist, wird der Extruder 4 zunächst leer gefahren. Zum Leerfahren wird das Anfahrventil 34 zunächst geöffnet, also derart in der Richtung 35 verlagert, dass das im Extruder 4 befindliche Material durch die zweite Durchgangsbohrung 37 abgeleitet werden kann. Durch das Öffnen des Anfahrventils 34 wird der Druck im Extruder 4 reduziert. Weiterhin wird der zweite Schalter 20 geschlossen, so dass der Frequenzumrichter 12 mit dem Zusatz-Drehstrommotor 11 verbunden wird. Der erste Schalter 17 und der dritte Schalter 23 bleiben offen, so dass der Haupt-Drehstrommotor 10 von dem zweiten Netzanschluss 6 sowie dem Frequenzumrichter 12 getrennt bleibt. Der Extruder 4 wird nun mit dem Zusatz-Drehstrommotor 11 leer gefahren. Das Leerfahren erfolgt mittels des Frequenzumrichters 12 drehzahlgeregelt bei einer geringen Extruder-Drehzahl.

Nach dem Leerfahren des Extruders 4 beträgt dessen Gegendrehmoment ca. 20% bis 25% des Nenndrehmomentes.

Nachdem der Extruder 4 mit dem Zusatz-Drehstrommotor 11 leergefahren wurde, wird der zweite Schalter 20 geöffnet und der erste Schalter 17 geschlossen, so dass der Zusatz-Drehstrommotor 11 von dem Frequenzumrichter 12 getrennt und der Haupt-Drehstrommotor 10 mit diesem verbunden wird. Der dritte Schalter 23 bleibt offen. Der mit dem Getriebe 3 und dem Extruder 4 gekoppelte Haupt-Drehstrommotor 10 wird nun mittels des Frequenzumrichters 12 drehzahlgeregelt angefahren. Mittels des Frequenzumrichters 12 kann der Anlaufstrom des Haupt-Drehstrommotors 10, den dieser über den Frequenzumrichter 12 aus dem Energieversorgungsnetz 8 zieht, auf ein gewünschtes Maß begrenzt werden. Beispielsweise kann der Anlaufstrom derart begrenzt werden, dass die Netzspannung nicht mehr als 8% beim Anfahren des Haupt-Drehstrommotors 10 abgesenkt wird.

Nachdem der Haupt-Drehstrommotor 10 seine Nenn-Drehzahl erreicht hat, synchronisiert die Synchronisiereinrichtung 26 den Haupt-Drehstrommotor 10. Die Synchronisiereinrichtung 26 vergleicht hierzu die Spannungen vor und nach dem dritten Schalter 23 in Bezug auf die Amplitude, die Frequenz und die Phasenlage und steuert den Frequenzumrichter 12 derart an, dass der dritte Schalter 23 geschlossen werden kann. Dies ist dann der Fall, wenn zulässige Abweichungen in Bezug auf die Amplitude, die Frequenz und die Phasenlage zwischen den Spannungen vor und nach dem dritten Schalter 23 eingehalten werden. Ist dies der Fall, gibt die Synchronisiereinrichtung 26 den dritten Schalter 23 frei, so dass dieser geschlossen wird und der Haupt-Drehstrommotor 10 mit dem zweiten Netzanschluss 6 direkt verbunden wird. Der Haupt-Drehstrommotor 11 wird nun mit einer im Wesentlichen unveränderbaren Drehzahl, nämlich seiner Nenn-Drehzahl, an dem Energieversorgungsnetz 8 betrieben. Nach dem Schließen des dritten Schalters 23 wird der erste Schalter 17 geöffnet und der Haupt-Drehstrommotor 10 von dem Frequenzumrichter 12 getrennt.

Zum Anfahren des Zusatz-Drehstrommotors 11 wird nun der zweite Schalter 20 geschlossen. Der erste Schalter 17 bleibt offen. Der Frequenzumrichter 12 ist nun mit dem Zusatz-Drehstrommotor 11 verbunden, so dass dieser mit geschlossener Kupplung 28 drehzahlgeregelt angefahren werden kann. Der Anlaufstrom, den der Zusatz-Drehstrommotor 11 beim Anfahren über den Frequenzumrichter 12 aus dem Energieversorgungsnetz 8 zieht, kann mittels des Frequenzumrichters 12 auf ein gewünschtes Maß - beispielsweise entsprechend dem beim Anfahren des Haupt-Drehstrommotors 10 - begrenzt werden. Der Zusatz-Drehstrommotor 11 wird im weiteren Betrieb mittels des Frequenzumrichters 12 drehzahlgeregelt. Zum nachfolgenden Verarbeiten eines Materials wird über den Zusatz-Drehstrommotor 11 und das Getriebe 3 in bekannter Weise eine materialabhängige Extruder-Drehzahl eingestellt.

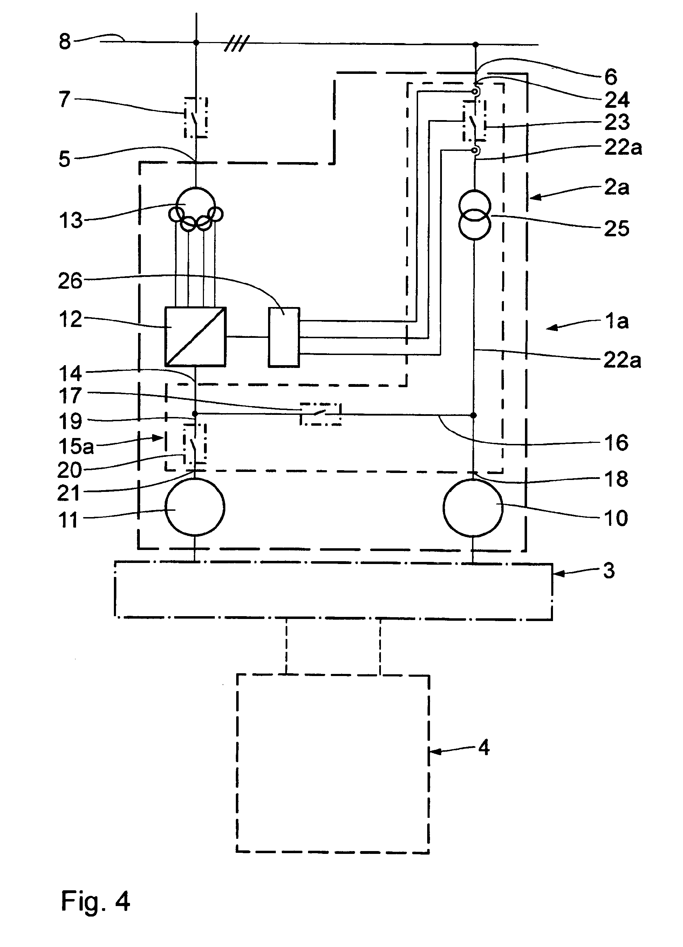

Nachfolgend wird unter Bezugnahme auf Fig. 4 ein zweites Ausfiihrungsbeispiel der Erfindung beschrieben. Konstruktiv identische Teile erhalten dieselben Bezugszeichen wie bei dem ersten Ausfiihrungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht darin, dass der dritte Schalter 23 der Umschalteinrichtung 15a zwischen dem zweiten Netzanschluss 6 und dem zweiten Transformator 25 angeordnet ist. Der dritte Schalter 23 übernimmt somit auch die Funktion des zweiten Netzschalters 9, der dementsprechend entfallen kann. Der zweite Netzanschluss 6 fällt somit mit dem zweiten Eingang 24 der Umschalteinrichtung 15a zusammen.

Nach dem Anfahren des Haupt-Drehstrommotors 10 und dem Synchronisieren des Haupt-Drehstrommotors 10 mit dem Energieversorgungsnetz 8 gibt die Synchronisiereinrichtung 26 den dritten Schalter 23 frei, so dass dieser geschlossen wird und der Haupt-Drehstrommotor 10 mit dem zweiten Netzanschluss 6 direkt verbunden wird. Durch das Schließen des dritten Schalters 23 wird gleichzeitig der zweite Transformator 25 in Betrieb genommen. Hinsichtlich der weiteren Funktionsweise wird auf das vorangegangene Ausführungsbeispiel verwiesen.

## Patentansprüche

1. Verfahren zum Inbetriebnehmen einer Extruderanordnung, umfassend die Schritte:
- Bereitstellen einer Extruderanordnung mit
- - einem Extruder (4),
- - einer Antriebseinheit (2; 2a) für den Extruder (4), welche
- -- einen Haupt-Drehstrommotor (10) aufweist,
- -- einen drehzahlregelbaren Zusatz-Drehstrommotor (11) aufweist,
- -- einen Frequenzumrichter (12) zum Drehzahlregeln des Zusatz-Drehstrommotors (11) aufweist, und
- -- eine Umschalteinrichtung (15; 15a) zum umschaltbaren elektrischen Verbinden des Frequenzumrichters (12) entweder mit dem Haupt-Drehstrommotor (10) oder mit dem Zusatz-Drehstrommotor (11) aufweist, welche derart ausgebildet ist, dass der Frequenzumrichter (12) umschaltbar entweder mit dem Haupt-Drehstrommotor (10) oder mit dem Zusatz-Drehstrommotor (11) elektrisch verbindbar ist, und der Haupt-Drehstrommotor (10) über einen Netzanschluss (6) direkt mit einem Energieversorgungsnetz (8) elektrisch verbindbar ist,
wobei die Umschalteinrichtung (15; 15a) zum Anfahren des Haupt-Drehstrommotors (10) eine zwischen dem Frequenzumrichter (12) und dem Haupt-Drehstrommotor (10) angeordnete Leitung (16) mit einem ersten Schalter (17) aufweist,
wobei die Umschalteinrichtung (15; 15a) zum Anfahren des Zusatz-Drehstrommotors (11) eine zwischen dem Frequenzumrichter (12) und dem Zusatz-Drehstrommotor (11) angeordnete Leitung (19) mit einem zweiten Schalter (20) aufweist, und
wobei die Umschalteinrichtung (15; 15a) zum Betreiben des Haupt-Drehstrommotors (10) mit einer im Wesentlichen unveränderbaren Drehzahl eine zwischen dem Netzanschluss (6) und dem Haupt-Drehstrommotor (10) angeordnete Leitung (22; 22a) mit einem dritten Schalter (23) aufweist,
- - einem Getriebe (3), welches
- -- antriebsseitig mit dem Haupt-Drehstrommotor (10) und dem Zusatz-Drehstrommotor (11) mechanisch koppelbar ist, und
- -- abtriebsseitig mit dem Extruder (4) mechanisch koppelbar ist,
- Leerfahren des Extruders (4) vor dem Anfahren des Haupt-Drehstrommotors (10), wobei zum Leerfahren des Extruders (4) die Umschalteinrichtung (15; 15a) derart betätigt wird, dass der Zusatz-Drehstrommotor (11) mit dem Frequenzumrichter (12) verbunden wird und der Haupt-Drehstrommotor (10) von dem Netzanschluss (6) sowie dem Frequenzumrichter (12) getrennt wird,
- Betätigen der Umschalteinrichtung (15; 15a) derart, dass
- - der Haupt-Drehstrommotor (10) von dem Netzanschluss (6) zum direkten Verbinden des Haupt-Drehstrommotors (10) mit dem Energieversorgungsnetz (8) getrennt und mit dem Frequenzumrichter (12) verbunden wird, und
- - der Zusatz-Drehstrommotor (11) von dem Frequenzumrichter (12) getrennt wird,
- Anfahren des mit dem leergefahrenen Extruder (4) über das Getriebe (3) gekoppelten Haupt-Drehstrommotors (10) mittels des Frequenzumrichters (12),
- Betätigen der Umschalteinrichtung (15; 15a) derart, dass
- - der Haupt-Drehstrommotor (10) mit dem Netzanschluss (6) verbunden und von dem Frequenzumrichter (12) getrennt wird, und
- - der Zusatz-Drehstrommotor (11) mit dem Frequenzumrichter (12) verbunden wird, und
- Anfahren des Zusatz-Drehstrommotors (12), wobei nach dem Anfahren des Haupt-Drehstrommotors (10) und des Zusatz-Drehstrommotors (11) eine Extruder-Drehzahl über den mit dem Frequenzumrichter (12) verbundenen Zusatz-Drehstrommotor (11) eingestellt wird.

2. Verfahren nach Anspruch 1, **dadurch gekennzeichnet, dass** die Antriebseinheit (2; 2a) eine Synchronisiereinrichtung (26) zum direkten Zuschalten des angefahrenen Haupt-Drehstrommotors (10) an das Energieversorgungsnetz (8) aufweist.

3. Verfahren nach Anspruch 1 oder 2, **dadurch gekennzeichnet, dass** die Antriebseinheit (2; 2a) eine Gesamtantriebsleistung hat, wobei der Frequenzumrichter (12) auf einen Anteil von 15 % bis 45 %, insbesondere von 20 % bis 40 %, und insbesondere von 25 % bis 35 %, der Gesamtantriebsleistung ausgelegt ist.

4. Verfahren nach Anspruch 3, **dadurch gekennzeichnet, dass** der Frequenzumrichter (12) entsprechend einem Anteil des Zusatz-Drehstrommotors (11) an der Gesamtantriebsleistung ausgelegt ist.

5. Verfahren nach einem der Ansprüche 1 bis 4, **dadurch gekennzeichnet, dass** der Extruder (4) ein gleichsinnig drehender Doppelschneckenextruder ist.

6. Verfahren nach einem der Ansprüche 1 bis 5, **dadurch gekennzeichnet,**
**dass** an einem Schalter (23) zum direkten Verbinden des Haupt-Drehstrommotors (10) mit dem Netzanschluss (6) vor dem Schalter (23) eine erste Spannung und nach dem Schalter (23) eine zweite Spannung anliegt, die vor dem Schließen des Schalters (23) miteinander synchronisiert werden.

## Claims

1. Method for starting up an extruder installation, the method comprising the steps:
- providing an extruder installation comprising
- - an extruder (4);
- - a drive unit (2; 2a) for the extruder (4), the drive unit (2; 2a)
- -- having a main three-phase motor (10);
- -- having a speed-adjustable auxiliary three-phase motor (11);
- -- a frequency converter (12) for adjusting the speed of the auxiliary three-phase motor (11); and
- -- a switching device (15; 15a) providing for a switchable electrical connection of the frequency converter (12) either to the main three-phase motor (10) or to the auxiliary three-phase motor (11), the switching device (15; 15a) being configured such as to allow a switchable electrical connection of the frequency converter (12) either to the main three-phase motor (10) or to the auxiliary three-phase motor (11) and to allow a direct electrical connection of the main three-phase motor (10) to a mains connection (8) via a mains connection (6),
with the switching device (15; 15a) having a line (16) comprising a first switch (17), the line being arranged between the frequency converter (12) and the main three-phase motor (10) for starting the main three-phase motor (10);
with the switching device (15; 15a) having a line (19) comprising a second switch (20), the line being arranged between the frequency converter (12) and the auxiliary three-phase motor (11) for starting the auxiliary three-phase motor (11); and
with the switching device (15; 15a) having a line (22; 22a) comprising a third switch (23), the line being arranged between the mains connection (6) and the main three-phase motor (10) for running the main three-phase motor (10) at a substantially unchangeable speed;
- - a gearbox (3) which
- -- is, on its driven side, adapted for mechanical coupling to the main three-phase motor (10) and the auxiliary three-phase motor (11); and
- -- is, on its driving side, adapted for mechanical coupling to the extruder (4);
- emptying the extruder (4) prior to starting the main three-phase motor (10), with the switching device (15; 15a) being actuated for emptying the extruder (4) such that the auxiliary three-phase motor (11) is connected to the frequency converter (12) while the main three-phase motor (10) is disconnected from the mains connection (6) and the frequency converter (12);
- actuating the switching device (15; 15a) such that
- - the main three-phase motor (10) is disconnected from the mains connection (6) for direct connection of the main three-phase motor (10) to the mains connection (8) and connected to the frequency converter (12); and
- - the auxiliary three-phase motor (11) is disconnected from the frequency converter (12);
- starting the main three-phase motor (10), which is coupled to the emptied extruder (4) via the gearbox (3), by means of the frequency converter (12);
- actuating the switching device (15; 15a) such that
- - the main three-phase motor (10) is connected to the mains connection (6) and disconnected from the frequency converter (12); and
- - the auxiliary three-phase motor (11) is connected to the frequency converter (12); and
- starting the auxiliary three-phase motor (12), with an extruder speed being set via the auxiliary three-phase motor (11) connected to the frequency converter (12) after starting the main three-phase motor (10) and the auxiliary three-phase motor (11).

2. Method according to claim 1, **characterized in that** the drive unit (2; 2a) has a synchronizing unit (26) for direct connection of the main three-phase motor (10) to the mains connection (8) after start-up.

3. Method according to claim 1 or 2, **characterized in that** the drive unit (2; 2a) has a total driving power, with the frequency converter (12) being configured to provide a percentage of 15% to 45%, in particular of 20% to 40%, and in particular of 25% to 35% of the total driving power.

4. Method according to claim 3, **characterized in that** the frequency converter (12) is configured in relation to a percentage of the total driving power provided by the auxiliary three-phase motor (11).

5. Method according to one of claims 1 to 4, **characterized in that** the extruder (4) is a twin-screw extruder with the screws rotating in the same direction.

6. Method according to one of claims 1 to 5, **characterized in that** a first voltage is applied to a switch (23) upstream of the switch (23) for directly connecting the main three-phase motor (10) to the mains connection (6), and a second voltage is applied downstream of the switch (23), which voltages are synchronized with each other before the switch (23) is closed.

## Revendications

1. Procédé de démarrage d'une extrudeuse, comprenant les étapes :
- de mise en place d'une extrudeuse comprenant
- - un extrudeur (4),
- - une unité d'entraînement (2 ; 2a) pour l'extrudeur (4) qui
- -- présente un moteur tournant électrique principal (10),
- -- présente un moteur tournant électrique auxiliaire (11), pouvant être réglé au niveau du nombre de tours,
- -- présente variateur de vitesse (12) pour le réglage du nombre de tours du moteur tournant électrique auxiliaire (11), et
- -- présente un système de commutation (15 ; 15a) pour une liaison électrique commutable du variateur de vitesse (12) soit avec le moteur tournant électrique principal (10), soit avec le moteur tournant électrique auxiliaire (11), système qui est conçu de telle sorte que le variateur de vitesse (12) peut être commuté, pour une liaison électrique, soit avec le moteur tournant électrique principal (10), soit avec le moteur tournant électrique auxiliaire (11), et le moteur tournant électrique principal (10) peut être relié électriquement directement avec un réseau d'alimentation en énergie (8),
le système de commutation (15 ; 15a) présentant une ligne (16), disposée entre le variateur de vitesse (12) et le moteur tournant électrique principal (10), comprenant un premier commutateur (17), pour le démarrage du moteur tournant électrique principal (10),
le système de commutation (15 ; 15a) présentant une ligne (19), disposée entre le variateur de vitesse (12) et le moteur tournant électrique auxiliaire (11), comprenant un deuxième commutateur (20), pour le démarrage du moteur tournant électrique secondaire (11), et
le système de commutation (15 ; 15a) présentant une ligne (22 ; 22a), disposée entre le raccordement au réseau (6) et le moteur tournant électrique principal (10), comprenant un troisième commutateur (23), pour le fonctionnement du moteur tournant électrique principal (10) avec un nombre de tours dans l'ensemble non variable,
- - un entraînement (3) qui
- -- du côté entrée, peut être couplé mécaniquement avec le moteur tournant électrique principal (10) et le moteur tournant électrique auxiliaire (11), et
- -- du côté sortie, peut être couplé mécaniquement avec l'extrudeur (4),
- de mise en route à vide de l'extrudeur (4) avant le démarrage du moteur tournant électrique principal (10), le système de commutation (15 ; 15a) étant actionné de telle manière pour faire tourner l'extrudeur (4) à vide que le moteur tournant électrique auxiliaire (11) est relié avec le variateur de vitesse (12) et que le moteur tournant électrique principal (10) est coupé du raccordement au réseau (6) ainsi que du variateur de vitesse (12),
- d'actionnement du système de commutation (15 ; 15a) de telle sorte que
- - le moteur tournant électrique principal (10) est coupé du raccordement au réseau (6) pour une liaison directe du moteur tournant électrique principal (10) avec le réseau d'alimentation en énergie (8) et est relié avec le variateur de vitesse (12), et
- - le moteur tournant électrique auxiliaire (11) est coupé du variateur de vitesse (12),
- de démarrage du moteur tournant électrique principal (10), couplé avec l'extrudeur (4) ayant tourné à vide par l'intermédiaire de l'entraînement, au moyen du variateur de vitesse (12),
- d'actionnement du système de commutation (15 ; 15a) de telle sorte que
- - le moteur tournant électrique principal (10) est relié avec le raccordement au réseau (6) et est coupé du variateur de vitesse (12), et
- - le moteur tournant électrique auxiliaire (11) est relié avec le variateur de vitesse (12), et
- de démarrage du moteur tournant électrique auxiliaire (11), où, après le démarrage du moteur tournant électrique principal (10) et du moteur tournant électrique auxiliaire (11), un nombre de tours est réglé par l'intermédiaire du moteur tournant électrique auxiliaire (11) relié au variateur de vitesse (12).

2. Procédé selon la revendication 1 **caractérisé en ce**
**que** l'unité d'entraînement (2 ; 2a) présente un dispositif de synchronisation (26) pour la mise en circuit directe du moteur tournant électrique principal (10) avec le réseau d'alimentation en énergie (8).

3. Procédé selon les revendications 1 ou 2 **caractérisé en ce**
**que** l'unité d'entraînement (2 ; 2a) possède une puissance globale d'entraînement, le variateur de vitesse (12) couvrant une proportion de 15 % à 45 %, notamment de 20 % à 40 % et en particulier de 25 % à 35 % de la puissance globale d'entraînement.

4. Procédé selon la revendication 3 **caractérisé en ce**
**que** le variateur de vitesse (12) couvre de manière correspondante une partie du moteur tournant électrique auxiliaire (11) pour la puissance globale d'entraînement.

5. Procédé selon l'une des revendications de 1 à 4 **caractérisé en ce que** l'extrudeur (4) est un extrudeur à double vis tournant dans le même sens.

6. Procédé selon l'une des revendications de 1 à 5 **caractérisé en ce**
**qu'**il existe une première tension pour une liaison directe du moteur électrique tournant principal (10) avec le raccordement au réseau (6) avant le commutateur (23) et une seconde tension après le commutateur (23), tensions qui sont synchronisées avant la fermeture du commutateur (23).
